# EUROPEAN PATENT SPECIFICATION

(11) **EP 2 431 206 B1**
(45) Date of publication and mention of the grant of the patent: **15.07.2015**
(21) Application number: 11181613.8
(22) Date of filing: 16.09.2011
(51) Int. Cl.: B60J 7/06

(54) **Arrangement for laying out a covering over a container**
Anordnung zum Auslegen einer Abdeckung über einen Behälter
Agencement pour tracer une couverture sur un récipient

(30) Priority: 16.09.2010 NL 2005357
(43) Date of publication of application: 21.03.2012
(73) Proprietor: Mofrasa B.V., 6171 GP Stein (NL)
(72) Inventor: Meuleberg, Leo Wilhelmus Jacobus, 6171 GP Stein (NL)
(74) Representative: Algemeen Octrooi- en Merkenbureau B.V.

(56) References cited:
- WO-A1-2010/054960
- DE-A1-102006 005 161
- US-A1- 2003 173 795

## Description

### FIELD OF THE INVENTION

The invention relates to the field of providing a covering over containers and in particular to the field of laying out a flexible covering, the containers being either in a stand-alone scenario or comprised by a lorry.

### BACKGROUND OF THE INVENTION

When carrying certain load, it is preferred that certain containers are covered. In certain scenarios, depending on the load and whether such a container is in transport, different requirements apply. Coverings for containers, in particular for containers comprised by a lorry, are among others provided as rigid flaps that pivot over an axis at the edges of the container parallel to the length of the lorry. Such flaps are heavy, expensive and pose a thread when not closed properly as in such case the flaps stick out either above or at the sides of the lorry, which means a collision risk with structures and vehicles.

Another option is to cover the container with a canvas. This option is cheaper, though is cumbersome, in particular in case of windy weather. It may also be dangerous as the person laying out the canvas over the top of the container has to move over the load in the container.

WO 2010/054960 discloses a device for covering a surface comprising a drum mounted to rotate and able to wind up or unwind a cover. Said drum is mounted on a longitudinal-translation mechanism comprising two flexible belts fixed only a each of their ends to the four corners of the surface that is to be covered and arranged along the two lengths of the perimeter of the surface that is to be covered and a carriage transversely overhanging the surface and supporting the drum, said carriage comprising at each of its ends: a drive wheel the rotation axle of which is parallel to that of said drum; at least two casters resting on the surface directly adjacent to the surface that is to be covered and allowing for the longitudinal translational movement of the carriage, these being mounted on each side of the drive wheel and together with the latter constituting a triangle of which the drive wheel forms the vertex; so that the sections of each flexible belt comprised between their points of attachment and the casters, are pressed against the length of the periphery of the surface that is to be covered, and so that the section of each belt comprised between the at least two casters runs over the drive wheel without slipping.

Such arrangement is fixedly connected to the surface or at least cumbersome to transfer to another surface to be covered, as the two flexible belts have to be arranged along the perimeter of the other surface.

### OBJECT AND SUMMARY OF THE INVENTION

There is a preference to have a more convenient arrangement for covering a container.

The invention provides in a first aspect an arrangement for laying out a covering over a container, the arrangement comprising: An elongated rotatable holding unit connectable to the container for holding the covering in rolled-up position; and a first driving unit connectable to the covering for laying out the covering over the container.

By keeping the covering on a holding unit in a rolled up position and laying it out from a rolled up position, the risk of elements of the covering significantly sticking out from the container or a lorry carrying the container is significantly reduced. Furthermore, by employing a driving unit laying out the covering, there is at least less need to climb on top of the container an potential load carried by the container to lay out the covering manually.

An embodiment of the arrangement according to the invention comprises an elongated carriage of which the oblong side is in use substantially parallel to the length of the holding unit, on which carriage the first driving unit is mounted, wherein: the carriage is movable over upper edges of the container in a line substantially perpendicular to the length of the holding unit by means of a first propulsion element connected to the first driving unit for propelling the carriage along at least a first upper edge of the container; and the first driving unit is connectable to the covering via the carriage.

With the carriage moving over the container and having the covering connected to the carriage, the covering is moved over the container. With one side of the covering connected to the carriage and one side to an edge of the container, said edge being parallel to the holding unit, the rolled up covering is unrolled and laid out over the container by the carriage.

In an embodiment of the arrangement according to the invention, the first propulsion element is located at a first extremity located at an end of the oblong side of the carriage, the carriage further comprising a second propulsion element located at a second extremity of the carriage opposite to the first extremity. With two propulsion elements located at extremities of the oblong sides of the carriage, so at the transverse sides, the carriage can be properly guided over two opposite edge of the container.

In a further embodiment of the arrangement according to the invention, the holding unit is mounted on the carriage. An advantage of this embodiment is that the arrangement is provided in one single piece that can be placed on a container in one single piece. For proper functioning, an extremity of a covering comprised by the holding unit on the outside of the roll is to be connected to a side of the container parallel to the length of the holding unit and the arrangement is ready for use.

In again a further embodiment of the arrangement according to the invention, the first rotatable cylinder is provided with a first flange having a diameter larger than the first rotatable cylinder for guiding the first rotatable cylinder over the first upper edge of the container and the second rotatable cylinder is provided with a second flange having a diameter larger than the second rotatable cylinder for guiding the first rotatable cylinder over the second upper edge of the container,

This embodiment is particularly advantageous for containers having narrow upper edges. The flanges keep the rotatable cylinders on track along the upper edges of the container. This allows the carriage, to follow a substantially straight line while moving over the container for laying out the covering. In this way, the covering is laid out evenly over the container. This way of guiding the arrangement removes the need of fixed guiding elements like belts to be placed on the container, thus making the arrangement more convenient to use.

In another embodiment of the arrangement according to the invention, the holding unit is coupled to a third driving unit for rotating the holding unit.

By driving the holding unit as well to a rotating movement, the holding unit is not rotated by a pulling movement on the covering, which in turn reduces stress in the covering, increasing the lifetime of the covering. Furthermore, this enables the covering to be rolled up on the holding element by means of the third driving unit.

Yet a further embodiment of the arrangement is connectable to a third edge of the container in a fixed way, further comprising a winding unit comprising a line, the line being connected to the winding unit at a first end of the line and connectable at a second end of the line to an extremity of the covering, said line being conductable over a pulley located at a fourth edge of the container, said fourth edge being located opposite to the third edge.

This arrangement has no significant moving parts moving over the container other than the covering and the lines. This reduces the risk of such moving parts colliding with any potential load of the container.

The invention provides in a second aspect a container comprising the arrangement according to any of the claims 1 through 10.

The invention provides in a third aspect a lorry comprising a power supply and the container according to the invention, wherein the first driving unit is connected to the power supply of the lorry.

### BRIEF DESCRIPTION OF THE DRAWINGS

The various aspects of the invention and embodiment thereof will now be discussed in further detail by means of Figures. In the Figures,
- Figure 1 A: shows a container with a carriage comprising a holding cylinder;
- Figure 1 B: shows a container with a carriage comprising a holding cylinder and an elongated motorised cylinder
- Figure 2 A: shows a side view of the carriage comprising a holding cylinder;
- Figure 2 B: shows a top view of the carriage comprising a holding cylinder;
- Figure 3 A: shows a container with a carriage and a holding cylinder not comprised by the carriage;
- Figure 3 B: shows a side view of the carriage and the holding cylinder not comprised by the carriage
- Figure 4 A: shows a container with a fixed arrangement for laying out a covering over a container;
- Figure 4 B: shows a side view of a fixed arrangement for laying out a covering over a container;
- Figure 5: shows a lorry comprising a container with a carriage for laying out a covering over the container.

### DESCRIPTION OF PREFERRED EMBODIMENTS

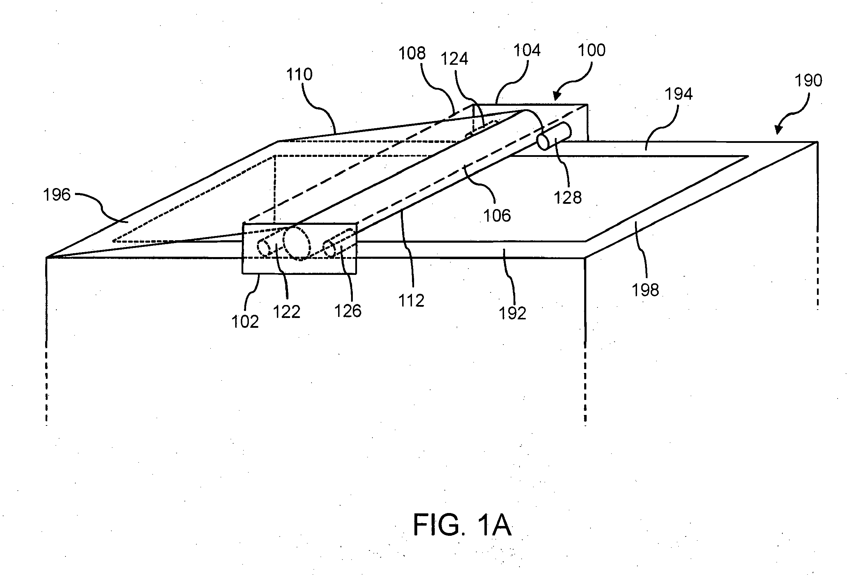

Figure 1 A shows a container 190 having a first upper edge 192, a second upper edge 194 opposite to the first upper edge 192, a third upper edge 196 ranging from the first upper edge 192 to the second upper edge 194 and a fourth upper edge 198 opposite to the third upper edge 196. The container 190 is preferably a standard iron ISO container being open at the top, though other sizes and materials may be employed as well.

On the top of the container 190, a carriage 100 is provided. The carriage 100 comprises a frame comprising a first sideplate 102, a second sideplate 104, a first connecting bar 106 and a second connecting bar 108. The connecting bars range from the first sideplate 102 to the second sideplate 104.

The carriage 100 further comprises a holding cylinder 112 having a sheet 110 rolled thereon. The holding cylinder 112 is connected to the first sideplate 102 at a first end of the holding cylinder 112 and to the second sideplate 104 at a second end of the holding cylinder 112, the first end of the holding cylinder 112 being opposite to the second end. The sheet 110 is provided for covering the open top of the container 190. A first edge of the sheet 110 is attached to the third upper edge 196 of the container 190. a second edge of the sheet 110 that is fixed on the holding cylinder 112, the second edge of the sheet 110 being opposite to the first edge of the sheet 110.

The carriage 100 also comprises a first motorised roller 122, a second motorised roller 124 (not visible on Figure 1 A), a first support roller 126 and a second support roller 128. The first motorised roller is located on the first upper edge 192 of the container 190 and is arranged to propel the carriage 100 over the container from the third upper edge 196 to the fourth upper edge 198 and the opposite direction. The first motorised roller 122 and the first support roller 126 are rotatably connected to the first sideplate 102 on either side of the holding cylinder 112. The second motorised roller 124 and the second support roller 128 are rotatably connected to the second sideplate 104 on either side of the holding cylinder 112. Though motorised cylinders or rollers are preferred as propelling elements, also other propelling elements like tracked elements may be used as well.

The first support roller 126 is located on the first upper edge 192 for supporting the carriage 100 in moving along the third upper edge 196. The second motorised roller is located on the second upper edge 194 of the container 190 and is arranged to move the carriage 100 over the container as well. The second support roller 128 is located on the second upper edge 194 for supporting the carriage 100 in moving along the fourth upper edge 198.

With the carriage 100 moving along the first upper edge 192 and the second upper edge 194 in the direction of the fourth upper edge 198 and the first edge of the sheet 110 being attached to the third upper edge 196, the sheet 110 is unrolled from the holding cylinder 112 and laid out over the top opening of the container 190, thus covering said opening.

As discussed, the moving of the carriage 100 is effectuated by means of the first motorised cylinder 122 and the second motorised cylinder 124 as propelling elements. An electromotor or other driving element provided in both motorised cylinders results in a rotating movement of the motorised cylinders, propelling the carriage 100 over the first upper edge 192 and the second upper edge 194.

The top opening of the container 190 is uncovered by moving the carriage 100 from the fourth upper edge 198 to the third upper edge 196. In addition, the holding cylinder 112 rotates in order to wrap the sheet 100 back around the holding cylinder 112.

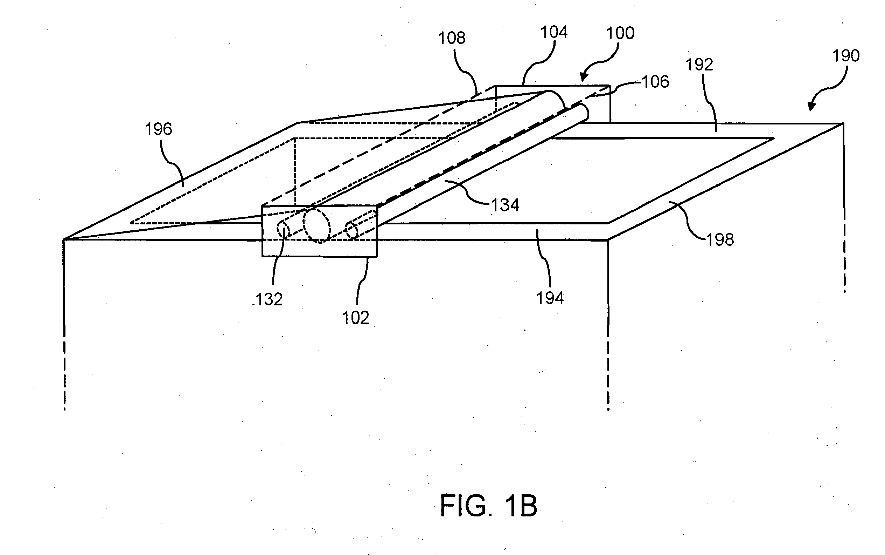

Figure 1 B shows a variation the embodiment shown by Figure 1 A. Instead of the first motorised cylinder 122, the second motorised cylinder 124, the first support cylinder 126 and the second support cylinder 128, a single elongated motorised cylinder 132 and a single elongated support cylinder 134 are connected to the first sideplate 102 and the second sideplate 104 at opposite extremities of the elongated motorised cylinder 132 and the elongated support cylinder 134.

With the carriage 100 placed on the top of the container 190, the elongated motorised cylinder 132 and the elongated support cylinder 134 both reach from the first upper edge 192 to the second upper edge 194. In this way, the elongated motorised cylinder 132 performs the function of the first motorised cylinder 122 and the second motorised cylinder 124. Likewise, the elongated support cylinder performs the function of the first support cylinder 126 and the second support cylinder 128.

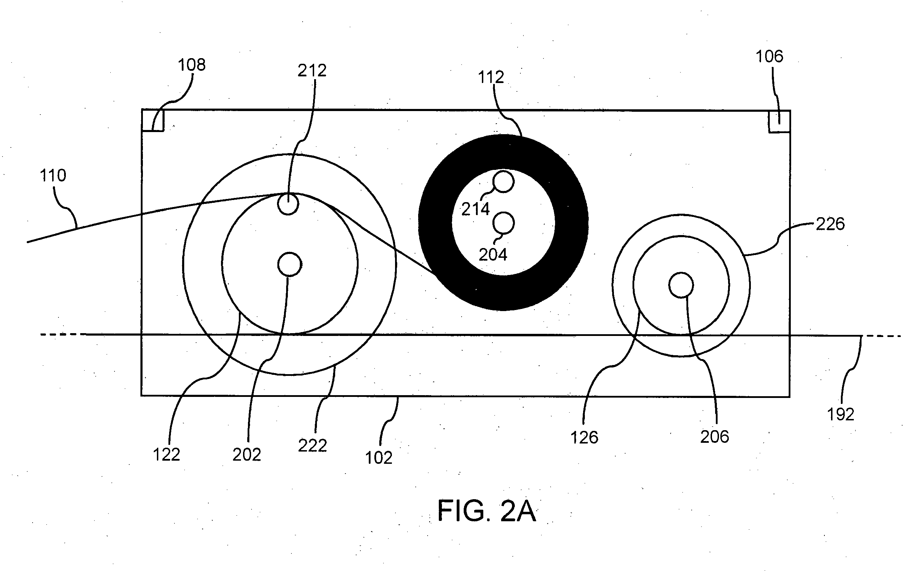

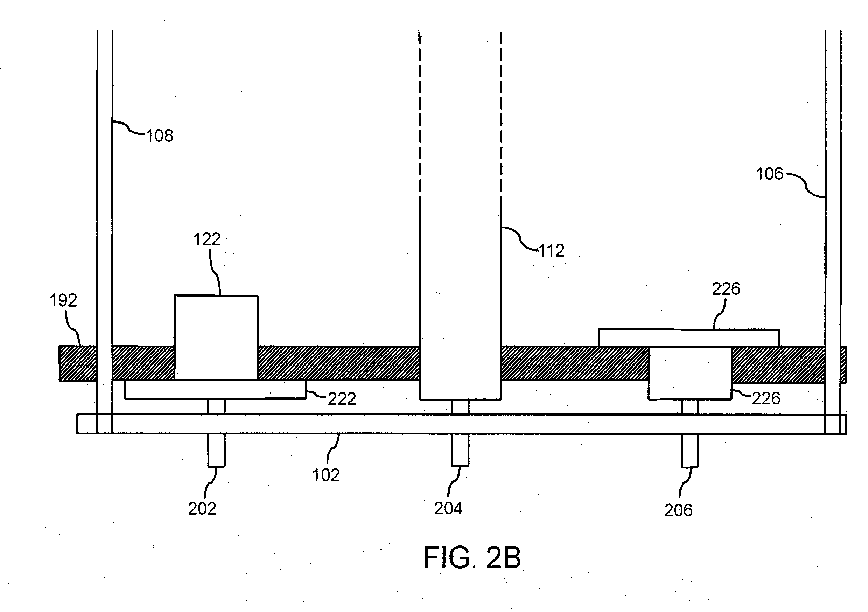

Figure 2 A shows a sideview of the carriage 100 and Figure 2 B shows a top view of the carriage 100. Figure 2 A and Figure 2 B will be discussed together. The first motorised cylinder 122 is connected to the first sideplate via a first axle 202, the holding cylinder 112 is connected to the first sideplate 102 via a second axle 204 and the first support cylinder is connected to the first sideplate 102 via a third axle 206. Figure 2 B also shows the first upper edge 192 of the container 190.

Figure 2 A and Figure 2 B show the first motorised cylinder 122 in further detail, comprising a first tubular motor 212 for driving the first motorised cylinder for propelling the carriage 100. Tubular electromotors are particularly well known from their application in sunscreens. Alternatively, also other electromotors, hydraulic motors, combustion engines, other mechanical power sources or a combination thereof may be used as a driving unit for driving the motorised cylinder 122.

The first motorised cylinder 122 further comprises a first flange 222 for guiding the first motorised cylinder 122 and with that the carriage 100 along the first upper edge 192. The first support cylinder 126 is provided with a second flange 226 for the same purpose. The first flange 222 is provided to guide the carriage 100 along the outer side of the first upper edge 192 and the second flange 226 is provided to guide the carriage 100 along the inner side of the first upper edge 192.

Alternatively, first flange 222 may be provided on the inner side and the second flange 226 may be provided on the outer side and/or additional flanges may be provided. In this embodiment, the first support cylinder 126 has a guiding function. Additionally or alternatively, the first support cylinder has a support function for supporting the carriage 100 on top of or along the first edge 192 and the second edge 194.

Additionally or alternatively, other guiding elements can be provided on the carriage 100 for guiding the carriage 100 along the upper side of the container 190. The issue with flanges is that in case the carriage 100 is not moving over the upper edges in a strictly linear way, friction occurs between the flanges and the upper sides of the container 190. This issue can be alleviated by providing guiding rollers on either side of the upper edges. Those guiding rollers are rotatable over an axis that is inclined or perpendicular relative to the axis of rotation of the first motorised cylinder. In yet another alternative, the first axle 202 and the third axle 206 are inclined over opposite angles. The holding cylinder 112 is provided with a second tubular motor 214 for rotating the holding cylinder 112. The second tubular motor 214 is particularly preferred for rolling up the sheet 110 while the carriage 100 is moving from the fourth upper edge 198 to the third upper edge 196 (Figure 1 A). Additionally, the holding cylinder 112 may also be driven while the carriage moves from the third upper edge 196 to the fourth upper edge 198 (Figure 1 A). This results in the roll of sheet 110 on the holding cylinder 112 not being unrolled by force exerted upon it only. This subsequently results in less stress on the sheet 110 and hence increases the lifetime of the sheet 110.

In most practical implementations, the second tubular motor 214 and hence the holding cylinder 112 is driven at constant annular velocity. A person skilled in the art will appreciate that this results in a decreasing speed of the sheet 110 rolling off as the outer diameter of the roll of sheet 110 will decrease. With the first motorised cylinder 122 driven at a constant speed resulting in a constant linear velocity equal to the average linear velocity of the outer side of the roll of sheet 110 on the holding cylinder 112, a person skilled in the art will appreciate that at first, the sheet will be laid loosely over the top of the container 190 and will at the end be laid tightly over the container 190.

Alternatively, the first motorised cylinder 122 and/or the holding cylinder 112 are driven at a variable annular velocity to keep the sheet 110 at a constant tension while rolling off and laying out the sheet 110. The variation in speed of the tubular motors to preserve a constant linear velocity of the sheet 110 rolling off from the holding cylinder 112 is controlled by a controlling unit. The controlling unit can make use of data of sensors coupled to the holding cylinder 112 and/or the first motorised cylinder 122 that provided feedback on the linear and/or annular velocity of the cylinders. It is noted that when the tubular motors employed are based on a stepping motor principle or equivalent principles, such feedback may not be required.

Alternatively, the holding cylinder 112 is not provided with the second tubular motor 214 but with a biasing spring, biasing the holding cylinder in a rotational direction in which direction the sheet 110 is rolled up on the holding cylinder 112. As discussed, this may increase wear on the sheet 110, though on the other hand, this keeps the tension on the sheet 100 constant while rolling up or rolling off, without a need for complicated control of various tubular motors.

Figure 2 A and Figure 2 B show the carriage 100 from one side only; the other side of the carriage 100, at the location of the second sideplate 104, is configured in an equivalent way. In particular, the second motorised cylinder 124 is provided with a further tubular motor. In another embodiment, no motor is provided, yielding an unmotorised cylinder instead of the second motorised cylinder 124. Alternatively, the first tubular motor 212 drives the first motorised cylinder 122 and the second motorised cylinder 124 for propelling the carriage 100, where the first motorised cylinder 122 and the second motorised cylinder 124 are connected. In an ultimate connected way, this yields the elongated motorised cylinder 132.

It is noted that to save the quality of the sheet 110, the holding cylinder 112 with a roll of sheet 100 on it is not intended to touch and certainly not to press against the first upper edge 192 of the container 190. Though the sheet 110 is in Figure 2 A indicated to move along the first motorised cylinder 122, the holding cylinder 112 can alternatively also be placed higher on the first sideplate 102. Additionally or alternatively, the sheet 110 can be wound around the holding cylinder 112 in a way opposite to that shown in Figure 2A to prevent the first motorised cylinder 122 from interfering with the sheet 110.

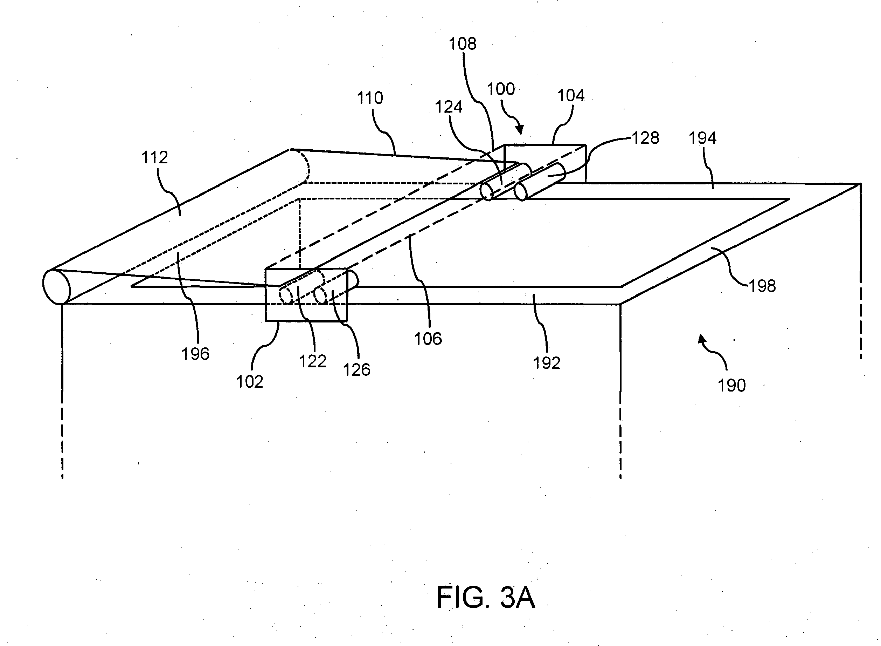

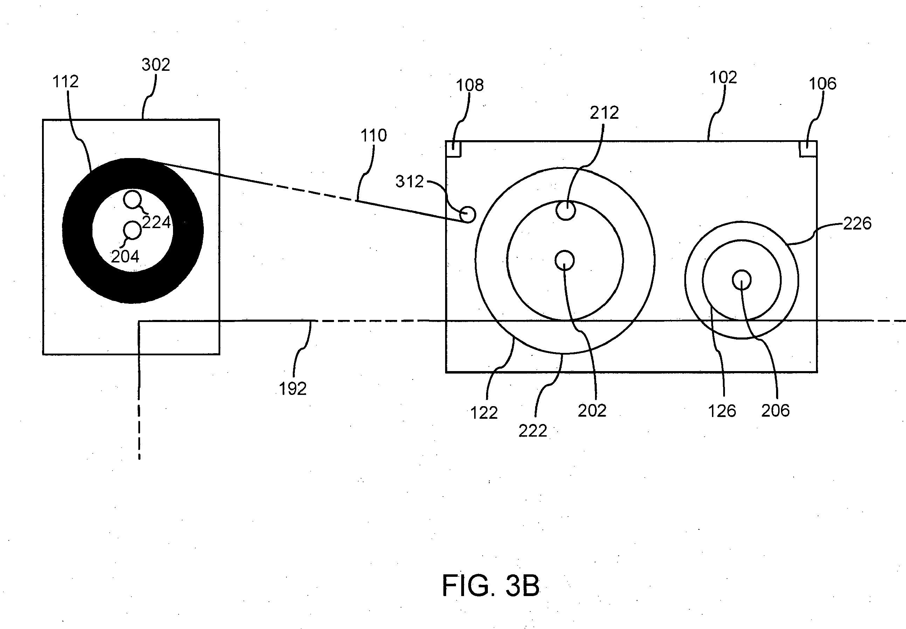

Figure 3 A and Figure 3 B show the container 190 with a different configuration of the carriage 100 and the holding cylinder 112. The holding cylinder 112 is rotatably connected to the third upper edge 196 by means of a first holding sideplate 302 and a second holding sideplate at the opposite side of the holding cylinder 112. Elements for connecting the holding sideplates to the container 190 are not shown on Figure 3 A and Figure 3 B for reason of clarity.

A person skilled in the art will appreciate that such holding elements can be embodied in numerous ways, from hooks for releasably attaching the holding sideplates to the third upper edge 196 of the container 190 to an embodiment using nuts and bolts for connecting the holding sideplates in a fixed manner to the container 190. Alternatively or additionally, the holding sideplates may be welded to the container 190. Connecting to the third upper edge 196 also comprises attaching the holding sideplates to the ends of the first upper edge 192 and second upper edge 194 adjacent to the third upper edge 196.

Again, the second edge of the sheet 110 that is fixed on the holding cylinder 112. the first edge of the sheet 110 being opposite to the second edge of the sheet 110 is attached to the carriage 100 by means of one or more connecting elements 312. The connecting elements 312 can be zippers, hooks and openings, rope, tie raps, other, or a combination thereof, provided on the sheet 110, the carriage 100 or both. Except for the absence of the holding cylinder 112 and its second axle 204, the second tubular motor 214 and the presence of the connecting elements 312, the configuration of the carriage is the same as in the embodiments discussed by means of Figure 2 A and Figure 2 B and will therefore not be discussed in further detail.

While the first motorised cylinder 122 driven by the first tubular motor 212 propels the carriage 100 towards the fourth upper edge of the container 190, the carriage 100 takes along the first edge of the sheet 110, thus unrolling the sheet 110 and laying out the sheet 100 on top of the container 190. For rolling up the sheet 110, the holding cylinder 112 is provided with the second tubular motor 214. As discussed before, the second tubular motor 214 may also be employed for rolling off the sheet 100 from the holding cylinder 112.

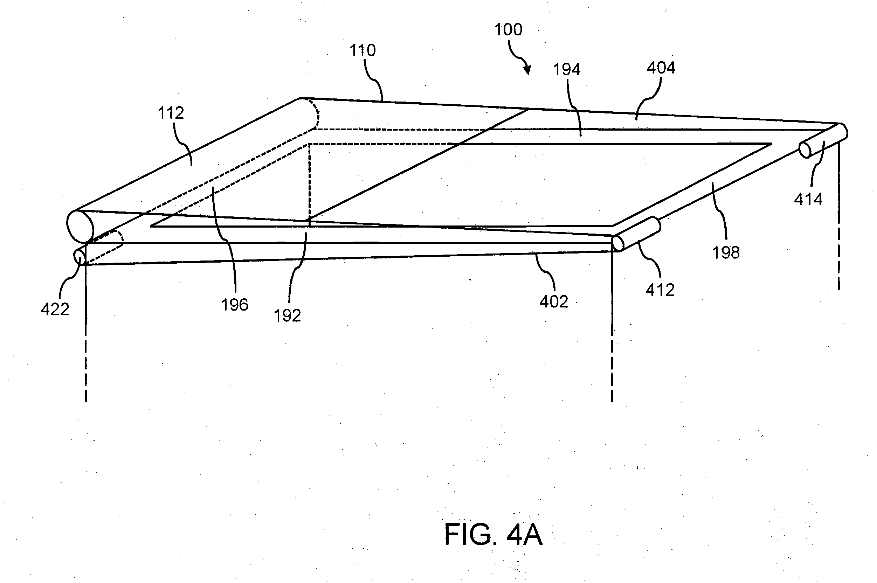

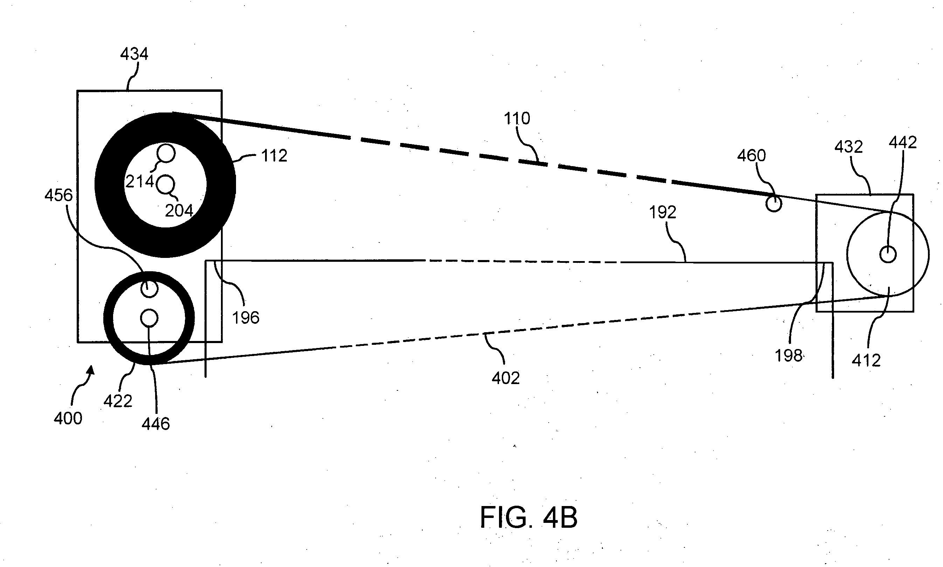

Figure 4 A and Figure 4 B show yet another embodiment of the arrangement. In the embodiment shown, the first end of the sheet 110 is driven by a stationary driving unit, being a third tubular motor 456 that drives a winch 422 that is connected to a first stationary sideplate 434 of a sheet winding unit 400 via a winch axle 446. The sheet winding unit 400 is located along the third upper edge 196 of the container 190. The first end of the sheet 110 is connected to a first line 402 via one or more connecting elements 460. The line may have a circular cross-section, a rectangular cross-section or any other cross-section. More in particular, the line may be provided as a rope-like line, as a tape or having another form or shape. The connecting elements 460 can be zippers, hooks and openings, rope, tie raps, other, or a combination thereof, provided on the sheet 110, the first line 402, or both.

The line first 402 is connected to the winch 422 over a first pulley 412 that is via a first pulley axle 442 connected to a first pulley sideplate 432 that is in turn connected to the container 190 at opposite ends of the fourth upper edge 198. The first pulley sideplate 432 and a second pulley sideplate (not shown) at an opposite end of the fourth upper edge 198 can be connected to the container 190 by any means already discussed, like hooks, nuts and bolts, other means or a combination thereof. The first pulley sideplate 432 and the second pully sideplate may also be connected by one or more connecting elements like rods or bars. This applies to the first stationary sideplate 434 and a second stationary sideplate (not shown) opposite to the first stationary sideplate 434 at the third upper edge as well.

The sheet 110 is unrolled and laid out over the top of the container 190 by winding the first line 402 on the winch 422 driven by the further tubular motor 456. The line first 402, led by the first pulley 412, in turn pulls along the sheet 110 over the top of the container 190. The container 190 is uncovered by rolling up the sheet 110 again on the holding cylinder 112. This is done by winding off the winch 422 by driving the winch by means of the further tubular motor 456 and by rolling the holding cylinder in clockwise direction by means of the tubular motor 214.

Along the second upper edge of the container 190, elements equivalent to the winch 422 and the first pulley 412 are provided, including a second pulley 414 and a second line 404.

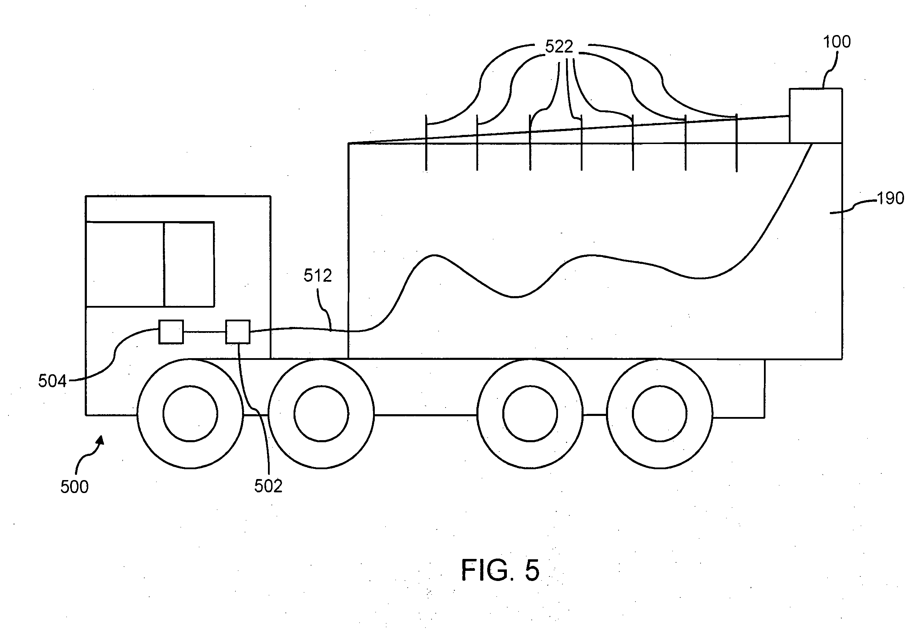

The container 190 is mountable on a lorry 500 as shown by Figure 5. Figure 5 shows the lorry 500 with the container 190 and the carriage 100 with the sheet 110 as shown in further detail by Figure 1. The various tubular motors are connected to a control unit 502 for controlling the movements of the carriage 100. The control unit 502 is in turn connected to a battery 504 of the lorry as a power source for providing energy for operating the various tubular motors and the control unit 502. The control unit 502 is connected to the carriage 100 and in particular to the tubular motors via a control and power wire 512.

Figure 5 also shows various rubber bands 522 for connecting the sheet 110 to the sides of the container 190. To this end, the container 190 comprises hooks along the first upper edge 192 and the second upper edge 194 for snapping the rubber bands 522 onto.

The container 190 can be either fixed to the lorry 500 or releasably mounted to the lorry 500. In both alternatives, the container 190 can be tiltable for unloading the container 190. This requires the rear side of the container 190 to open upon tilting to let the load of the container 190 out of the container 190.

Expressions such as "comprise", "include", "incorporate", "contain", "is" and "have" are to be construed in a non-exclusive manner when interpreting the description and its associated claims, namely construed to allow for other items or components which are not explicitly defined also to be present.

In the description above, it will be understood that when an element such as layer, region, substrate or other is referred to as being "connected to", "on" or "onto" another element, the element is either directly on or connected to the other element, or intervening elements may also be present.

Furthermore, the invention may also be embodied with less components than provided in the embodiments described here, wherein one component carries out multiple functions. Just as well may the invention be embodied using more elements than depicted in the Figures, wherein functions carried out by one component in the embodiment provided are distributed over multiple components.

A person skilled in the art will readily appreciate that various parameters disclosed in the description may be modified and that various embodiments disclosed in the claims may be combined without departing from the scope of the invention as defined in the claims.

It is stipulated that the reference signs in the claims do not limit the scope of the claims, but are merely inserted to enhance the legibility of the claims.

## Claims

1. Arrangement for laying out a covering (110) over a container (190), the arrangement comprising:
- An elongated rotatable holding unit (112) connectable to the container for holding the covering in rolled-up position;
- A first driving unit (212) connectable to the covering for laying out the covering over the container;
- An elongated carriage (100) of which the oblong side is in use substantially parallel to the length of the holding unit, on which carriage the first driving unit is mounted;
wherein the holding unit is mounted on the carriage, or wherein the holding unit is connectable to the container in a fixed way and the carriage comprises a covering coupling element (312) for coupling the cover to the carriage;
- A first propulsion element (122, 124, 132); and
- A second driving unit (214) coupled to the holding unit for rotating the holding unit
wherein:
- the carriage is movable over upper edges (192, 194) of the container in a line substantially perpendicular to the length of the holding unit by means of the first propulsion element connected to the first driving unit for propelling the carriage along at least a first upper edge of the container; and
- the first driving unit is connectable to the covering via the carriage;
**Characterised in that**
- the first propulsion element is driven at a constant annular velocity; and
- the second driving unit is driven at a constant annular velocity;
Such that in operation of the arrangement, at first, the sheet will be laid loosely over the top of the container and will at the end be laid tightly over the container.

2. Arrangement according to claim 1, wherein the first propulsion element is located at a first extremity located at an end of the oblong side of the carriage, the carriage further comprising a second propulsion element (122, 124) located at a second extremity of the carriage opposite to the first extremity.

3. Arrangement according to claim 2, further comprising a third driving unit coupled to the second propulsion element for propelling the carriage along a second upper edge (192, 194) of the container, the second upper edge being opposite to the first upper edge(192, 194).

4. Arrangement according to claim 2 or 3, wherein the first propulsion element comprises a first rotatable cylinder (122, 124) and the second propulsion element comprises a second rotatable cylinder (122, 124) of which rotatable cylinders at least one is connected to the first driving element.

5. Arrangement according to any of the claims. 1 to 4, the carriage further comprising a support element (134, 126, 128) in line with the first propulsion element in the line of movement of the carriage, the support element comprising a third rotatable cylinder (134, 126, 128).

6. arrangement according to claim 4, wherein the first rotatable cylinder is provided with a first flange (222) having a diameter larger than the first rotatable cylinder for guiding the first rotatable cylinder over the first upper edge of the container and the second rotatable cylinder is provided with a second flange having a diameter larger than the second rotatable cylinder for guiding the first rotatable cylinder over the second upper edge of the container.

7. Arrangement according to any of the preceding claims, wherein the holding unit comprises the covering.

8. Arrangement according to claim 7, wherein the covering is rolled around the holding element.

9. Container comprising the arrangement according to any of the preceding claims.

10. Lorry comprising a power supply and the container according to claim 9, wherein the first driving unit is connected to the power supply of the lorry.

## Patentansprüche

1. Baugruppe zum Auslegen einer Abdeckung (110) über einen Behälter (190), wobei die Baugruppe Folgendes umfasst:
- eine langgestreckte drehbare Halteeinheit (112), die mit dem Behälter verbindbar ist, um die Abdeckung in aufgerollter Position zu halten;
- eine erste Antriebseinheit (212), die mit der Abdeckung verbindbar ist, um die Abdeckung über den Behälter auszulegen;
- einen langgestreckten Schlitten (100), dessen Längsseite im Gebrauch im Wesentlichen parallel zur Länge der Halteeinheit ist und an dem die erste Antriebseinheit angebracht ist, wobei die Halteeinheit am Schlitten angebracht ist oder wobei die Halteeinheit fest mit dem Behälter verbindbar ist und der Schlitten ein Abdeckungskopplungselement (312) zum Koppeln der Bedeckung mit dem Schlitten umfasst;
- ein erstes Treibelement (122, 124, 132); und
- eine zweite Antriebseinheit (214), die mit der Halteeinheit gekoppelt ist, um die Halteeinheit zu drehen,
wobei:
- der Schlitten über obere Ränder (192, 194) des Behälters in einer Linie im Wesentlichen senkrecht zur Länge der Halteeinheit mittels des ersten Treibelements verfahrbar ist, das mit der ersten Antriebseinheit verbunden ist, um den Schlitten entlang zumindest einem ersten oberen Rand des Behälters zu treiben; und
- die erste Antriebseinheit über den Schlitten mit der Abdeckung verbindbar ist;
**dadurch gekennzeichnet, dass**
- das erste Treibelement so mit einer konstanten Kreisgeschwindigkeit angetrieben wird und
- die zweite Antriebseinheit so mit einer konstanten Kreisgeschwindigkeit angetrieben wird,
dass im Betrieb der Baugruppe das Tuch zuerst locker über die Oberseite des Behälters gelegt wird und am Ende straff über den Behälter gelegt wird.

2. Baugruppe nach Anspruch 1, wobei das erste Treibelement sich an einem ersten äußeren Ende befindet, das sich an einem Ende der Längsseite des Schlittens befindet, wobei der Schlitten ferner ein zweites Treibelement (122, 124) umfasst, das sich an einem zweiten äußeren Ende des Schlittens entgegengesetzt zu dem ersten äußeren Ende befindet.

3. Baugruppe nach Anspruch 2, welche ferner eine dritte Antriebseinheit umfasst, die mit dem zweiten Treibelement gekoppelt ist, um den Schlitten entlang einem zweiten oberen Rand (192, 194) des Behälters zu treiben, wobei der zweite obere Rand gegenüber dem ersten oberen Rand (192, 194) liegt.

4. Baugruppe nach Anspruch 2 oder 3, wobei das erste Treibelement einen ersten drehbaren Zylinder (122, 124) umfasst und das zweite Treibelement einen zweiten drehbaren Zylinder (122, 124) umfasst, von denen zumindest einer mit dem ersten Antriebselement verbunden ist.

5. Baugruppe nach einem der Ansprüche 1 bis 4, wobei der Schlitten ferner ein Stützelement (134, 126, 128) in einer Reihe mit dem ersten Treibelement in der Bewegungslinie des Schlittens umfasst, wobei das Stützelement einen dritten drehbaren Zylinder (134, 126, 128) umfasst.

6. Baugruppe nach Anspruch 4, wobei am ersten drehbaren Zylinder ein erster Flansch (222) vorgesehen ist, der einen größeren Durchmesser als der erste drehbare Zylinder besitzt, um den ersten drehbaren Zylinder über den ersten oberen Rand des Behälters zu führen, und am zweiten drehbaren Zylinder ein zweiter Flansch vorgesehen ist, der einen größeren Durchmesser als der zweite drehbare Zylinder besitzt, um den ersten drehbaren Zylinder über den zweiten oberen Rand des Behälters zu führen.

7. Baugruppe nach einem der vorhergehenden Ansprüche, wobei die Halteeinheit die Abdeckung umfasst.

8. Baugruppe nach Anspruch 7, wobei die Abdeckung um das Halteelement gewickelt ist.

9. Behälter, der die Baugruppe nach einem der vorhergehenden Ansprüche umfasst.

10. Lastwagen, der eine Energieversorgung und den Behälter nach Anspruch 9 umfasst, wobei die erste Antriebseinheit mit der Energieversorgung des Lastwagens verbunden ist.

## Revendications

1. Agencement pour disposer une couverture (110) sur un conteneur (190), l'agencement comprenant :
- une unité de retenue rotative allongée (112) raccordable au conteneur pour retenir la couverture dans une position enroulée ;
- une première unité d'entraînement (212) raccordable à la couverture pour disposer la couverture sur le conteneur ;
- un chariot allongé (100) dont le côté oblong est, durant l'utilisation, sensiblement parallèle à la longueur de l'unité de retenue, sur lequel chariot la première unité d'entraînement est montée, dans lequel l'unité de retenue est montée sur le chariot, ou dans lequel l'unité de retenue est raccordable au conteneur de manière fixe et le chariot comprend un élément d'accouplement de couverture (312) pour accoupler la couverture au chariot ;
- un premier élément de propulsion (122, 124, 132) ; et
- une deuxième unité d'entraînement (214) accouplée à l'unité de retenue pour faire tourner l'unité de retenue, dans lequel :
- le chariot est mobile sur des bords supérieurs (192, 194) du conteneur dans une ligne sensiblement perpendiculaire à la longueur de l'unité de retenue au moyen du premier élément de propulsion raccordé à la première unité d'entraînement pour propulser le chariot le long d'au moins un premier bord supérieur du conteneur ; et
- la première unité d'entraînement est raccordable à la couverture par l'intermédiaire du chariot ;
**caractérisé en ce que**
- le premier élément de propulsion est entraîné à une vitesse annulaire constante ; et
- la deuxième unité d'entraînement est entraînée à une vitesse annulaire constante ;
de sorte que, en fonctionnement de l'agencement, premièrement, la feuille sera disposée de façon lâche sur le haut du conteneur et sera à la fin disposée de façon serrée sur le conteneur.

2. Agencement selon la revendication 1, dans lequel le premier élément de propulsion est situé à une première extrémité située à une extrémité du côté oblong du chariot, le chariot comprenant en outre un second élément de propulsion (122, 124) situé à une seconde extrémité du chariot opposée à la première extrémité.

3. Agencement selon la revendication 2, comprenant en outre une troisième unité d'entraînement accouplée au second élément de propulsion pour propulser le chariot le long d'un second bord supérieur (192, 194) du conteneur, le second bord supérieur étant opposé au premier bord supérieur (192, 194).

4. Agencement selon la revendication 2 ou 3, dans lequel le premier élément de propulsion comprend un premier cylindre rotatif (122, 124) et le second élément de propulsion comprend un deuxième cylindre rotatif (122, 124), desquels cylindres rotatifs au moins un est raccordé au premier élément d'entraînement.

5. Agencement selon l'une quelconque des revendications 1 à 4, le chariot comprenant en outre un élément de support (134, 126, 128) en ligne avec le premier élément de propulsion dans la ligne de mouvement du chariot, l'élément de support comprenant un troisième cylindre rotatif (134, 126, 128).

6. Agencement selon la revendication 4, dans lequel le premier cylindre rotatif est pourvu d'une première bride (222) possédant un diamètre plus grand que le premier cylindre rotatif pour guider le premier cylindre rotatif sur le premier bord supérieur du conteneur et le deuxième cylindre rotatif est pourvu d'une seconde bride possédant un diamètre plus grand que le deuxième cylindre rotatif pour guider le premier cylindre rotatif sur le second bord supérieur du conteneur.

7. Agencement selon l'une quelconque des revendications précédentes, dans lequel l'unité de retenue comprend la couverture.

8. Agencement selon la revendication 7, dans lequel la couverture est enroulée autour de l'élément de retenue.

9. Conteneur comprenant l'agencement selon l'une quelconque des revendications précédentes.

10. Camion comprenant une alimentation en énergie électrique et le conteneur selon la revendication 9, dans lequel la première unité d'entraînement est connectée à 1"alimentation en énergie électrique du camion.
